# EUROPEAN PATENT SPECIFICATION

(11) **EP 1 613 006 B1**
(45) Date of publication and mention of the grant of the patent: **10.01.2007**
(21) Application number: 05014054.0
(22) Date of filing: 29.06.2005
(51) Int. Cl.: H04L 12/56

(54) **Ad-hoc extensions of a cellular air interface**
Ad Hoc Erweiterungen für eine zellulare Luftschnittstelle
Extensions ad-hoc pour un interface radio cellulaire

(30) Priority: 30.06.2004 EP 04291661
(43) Date of publication of application: 04.01.2006
(73) Proprietor: ALCATEL, 75008 Paris (FR)
(72) Inventor: Cervera, José Diaz, Dipl.-Ing., 46021 Valencia (ES); Sigle, Rolf, 73630 Remshalden (DE)
(74) Representative: Rausch, Gabriele

(56) References cited:
- WO-A-00/54539
- WO-A-03/103188
- WO-A-20/04002051
- US-A1- 2004 002 336

## Description

The present invention relates to a method for transmitting user data between a mobile client and a cellular network, the cellular network comprising an air interface, the method comprising the steps of:
- establishing a first connection between the mobile client and the cellular network via the air interface, the first connection comprising at least one control channel for exchanging signaling data between the mobile client and the cellular network;
- establishing a second connection between the mobile client and the cellular network according to the exchanged signaling data; and
- maintaining the second connection and transmitting the user data between the mobile client and the cellular network across the second connection.

The invention also relates to a mobile client comprising an air interface for directly connecting the mobile client to a cellular network for exchanging signaling data across a first connection and comprising an ad-hoc network interface for connecting the mobile client to an ad-hoc network for data transmission across a second connection.

The invention furthermore relates to a telecommunications system comprising:
- a cellular network,
- an ad-hoc network,
- a mobile client connected to the cellular network and to the ad-hoc network,
- a mobile relay connected to the cellular network and to the ad-hoc network,
- a first connection established between the mobile client and the cellular network via an air interface for exchanging signaling data between the mobile client and the cellular network, and
- a second connection established between the mobile client and the cellular network across the ad-hoc network and the mobile relay for transmission of user data between the mobile client and the cellular network.

Finally, the invention relates to a computer program adapted to be run on a data processing unit, in particular on a mobile client and/or a mobile relay.

A cellular network consists of different network elements such as a Core Network (CN), a Radio Access Network (RAN), and a mobile terminal (also called User Equipment, UE) e.g. a mobile telephone. Examples of cellular networks are GSM (Global System for Mobile communications) and UMTS (Universal Mobile Telecommunications System). In the following text the terminology according to the UMTS standard is preferably used. However, it is understood that the present invention is not limited to the UMTS standard but rather can be realized in all kinds of mobile telecommunication systems.

The Radio Access Network (RAN) is composed of a collection of Radio Network Subsystems (RNS). Each RNS includes a Radio Network Controller (RNC) and several Node Bs that are attached to and controlled by the RNC.

The Node B is a physical unit for radio transmission (and reception) and is attached to one or more cells. The main task of the Node B is the transmission and reception of data to from the mobile terminal. In addition the Node B measures the quality and strength of the connection to the mobile terminal.

The RNC is responsible for the control of its associated Node Bs. Thus, it is in charge of the management of resources in those Node Bs and in the cells to which these Node Bs are attached. The different elements of the RAN are interconnected with each other and towards the CN by means of a transmission network, which is usually a terrestrial network. Consequently, the RAN is named UTRAN (UMTS Terrestrial Radio Access Network).

Several logical interfaces have been defined for the interconnection of different types of network elements across the transmission network. In particular, the communication between an RNC and any of the Node Bs belonging to the same RNS takes place across the so-called Iub interface. Moreover, different RNCs (belonging to different RNSs) may communicate with each other using the so-called Iur interface. Finally, the communication between an RNC and the Core Network (and hence between RAN and CN) takes place across a so-called Iu interface.

In UTRAN, the RNC may play several roles with respect to the different Node Bs and mobile terminals. In each RNS, there is a single RNC, which is responsible for the control of all Node Bs in the RNS and their associated resources. In this case, the RNC plays the role of Controlling RNC (CRNC) for the Node Bs in the RNS. In addition to the control of Node Bs, the RNC is also responsible for controlling the connection of the mobile terminal to the cellular network. The RNC in charge of a particular user connection plays the role of a Serving RNC (SRNC) for the user.

A mobile terminal accesses the cellular network via one or several radio links which are accessible through a so called air interface. Data transmitted from the mobile terminal are carried over the air interface to one or several Node Bs. Each Node B transmits the data received from the mobile terminal together with measurement results to the associated Controlling RNC, via the Iub interface.

The Controlling RNC for a Node B through which the mobile terminal is accessing the network may also be the Serving RNC for the mobile terminal or a different RNC. In the latter case, the Controlling RNC for the Node B plays also the role of a Drift RNC with respect to the user connection, because data must be forwarded ("drifted") by this RNC to the Serving RNC responsible for the control of the user connection, using the Iur interface.

In UMTS the CN consists of a circuit-switched part (CS domain) and a packet-switched part (PS domain). Each of them is composed of several elements. One major element in the CS domain is the Mobile Switching Center (MSC), responsible e.g. for switching and signaling functions for mobile terminals, including support of user mobility through handover and location update procedures. Moreover, access to external circuit-switched networks is provided through a so called Gateway MSC. The MSC communicates with a Home Location Register (HLR) and a Visitor Location Register (VLR) which are databases storing permanent subscriber information and temporary user location information, respectively.

In the PS domain, a Serving GPRS Support Node (SGSN), can be considered as the counterpart of the MSC. The SGSN is responsible for managing the packet-switched related communications within the CN. The SGSN communicates with a Gateway GPRS Support Node (GGSN), which provides access to an external packet-switched network such as the Internet. A network address is assigned to each mobile terminal by the GGSN. This network address is valid in the external packet-switched network. This allows the mobile terminal to communicate with other terminals or servers in the external network.

The data that originated from the mobile terminal are transmitted through the CN to the receiver. This is for example a terminal connected to an external circuit-switched network such as the ISDN, an external packet-switched network like the Internet or another mobile terminal. If the receiver is another mobile terminal the data are transmitted from the CN to this mobile terminal via its associated Serving RNC and the Node B that controls the cell in which the other mobile terminal is located or the Node Bs responsible for those cells in which the terminal has an active radio link, in case of soft handover.

The transmission of data described so far relates mainly to user data, e.g. voice related data, that are dedicated to a specific receiver. Besides this user data, within a cellular network several control information have to be transmitted to make sure the cellular network operates properly. The control information is called signaling.

Signaling related data deal with subjects like handover control (including macro diversity), power control, exchange of measurements between network and terminals, mobility and location management. The signaling data can concern only one (so-called dedicated signaling data) or more of the mobile clients connected to the cellular network. Signaling data can also concern all of the mobile clients connected to the cellular network (so-called common signaling data).

A mobile terminal can be connected to several cells simultaneously. This option is called macro diversity. The set of cells the mobile terminal is connected to simultaneously is called the active set of the mobile terminal. The data streams received via the different cells of the active set are combined by the Node B (in case of softer handover, i.e. several cells in the active set belonging to the same Node B) or by the RNC (in case of soft handover, i.e. cells in the active set belong to different Node Bs). The mobile terminal measures the signal levels of these cells and reports the measurement results via the controlling Node Bs to the RNC. The RNC evaluates the reported data and causes the mobile terminal to change the set of active cells if necessary.

Soft handover involves the addition of a new radio link through another Node B in case of transmission quality deterioration to improve transmission quality (e.g. by reducing the error frame rates).

Since the same frequencies are used in an active cell and in the adjacent cells there exists the risk of interference. Thus, power control is an important issue. There exist various power control techniques in UMTS, e.g. the open-loop power control and the closed loop power control. According to the open loop power control the Node B broadcasts information about the minimum power needed to enable a mobile terminal to gain access to the cellular network. According to the closed loop power control the Node B transmits information to the mobile terminal to adjust the transmission power, according e.g. to a signal-to-interference ratio. The closed loop power control is a kind of dedicated signaling, since those information are not sent to all mobile terminals that reside in a cell (via broadcasting) but is dedicated to one specific mobile terminal.

Data transferred within UMTS can be divided into two groups. These are represented by control channels for transmitting signaling related data and traffic channels for transmitting user data. Examples for control channels and traffic channels are
- the Broadcast Control Channel (BCCH): Broadcast of system information, i.e. information related to the radio environment like code values in the cell and in the adjacent cells, power levels, etc.;
- the Paging Control Channel (PCH): Paging is performed in order to find out the actual location of the user and to notify the user of the arrival of an incoming call;
- the Common Control Channel (CCCH): Used for tasks common for all mobile terminals residing in the cell, for instance the initial access procedures. Since many users may use the CCCH simultaneously they are identified by unique identity (IMSI, International Mobile Subscriber Identifier, or U-RNTI, UTRAN Radio Network Temporary Identity);
- the Dedicated Control Channel (DCCH): Control information of dedicated and active connections, used for instance for handover control, measurement exchange, radio bearer establishments, and reconfigurations, SRNS (Serving Radio Network Subsystem) relocation (The change of control from the SRNS to another RNS (Radio Network Subsystem), and, in general most signaling procedures between the terminal and the network;
- the Dedicated Traffic Channel (DTCH): Most important channel for the transmission of dedicated user traffic (user data), e.g. voice or packet data; and
- Common Traffic Channel (CTCH): Information that is to be sent to all mobile terminals or a specific group of mobile terminals in the cell. This channel is mainly used for Cell Broadcast Services, which consist in the delivery of short text messages to all users or to the subscribed users in a cell.

Logical channels are mapped to transport channels within a layer - the so called MAC (Medium Access Control) layer - of the UTRAN protocol stack. The mapping may also include multiplexing several logical channels into the same transport channel. Transport channels are bearer services (i.e. transmission services) offered by the physical layer of the air interface.

Another layer - the so called physical layer - maps transport channels to physical channels. Physical channels correspond to actual radio channels used for the communication across the radio interface.

For extending a cellular network an ad-hoc network can be used. With an ad-hoc network extension a mobile terminal (here: mobile client) that is connected to the ad-hoc network communicates with the cellular network not directly but via another mobile terminal (here: mobile relay). The mobile relay is connected to the ad-hoc network and to the cellular network. The mobile relay can be directly connected to the cellular network or via other mobile relays. Data that are transmitted from the mobile client and are dedicated to the cellular network are first transmitted from the mobile client to the mobile relay using the ad-hoc network. Data sent by the mobile client to the mobile relay through the ad-hoc network can be sent either directly or via intermediate ad-hoc terminals. The mobile relay then relays these data directly to the cellular network. Data that are transmitted from the cellular network and are dedicated to the mobile client are first transmitted from the cellular network to the mobile relay using the air interface. The mobile relay then relays these data by forwarding it either directly or via further mobile relays (using the air interface or an ad-hoc network) to the mobile client via the ad-hoc network.

A method for transmitting user data between a mobile client and a cellular network, a mobile client, and a telecommunications system of the above-mentioned kind is known from WO 00/54539. That document describes a telecommunication system comprising a number of mobile clients disposed at different distances to a base station within an area of coverage (so-called cell), the base station being connected to a cellular network. Instead of transmitting user data directly between a mobile client and the base station, it is relayed by one or more other mobile clients before reaching the mobile client or the base station, respectively. Hence, the prior art describes a telecommunication system with one or more mobile clients acting as mobile relays and making part of an ad-hoc network. Once the ad-hoc network has been established between the mobile client and the mobile relays, the mobile relays receive and forward the entire signaling and user data. Only in the course of establishing the ad-hoc network and when a mobile client moves from the area of coverage from one base station to another, signaling data (synchronization and broadcast information; location update) is transmitted from the mobile client to the base station via the air interface. However, all the signaling data used for maintaining the connection between the mobile client and the mobile relays (probe signals or probe messages) within a cell are transmitted via the ad-hoc network.

The main idea of the prior art document is to provide a telecommunication system, in which data can be transmitted using a number of smaller hops, rather than a single relatively high powered hop, and at the same time to provide an efficient routing of data within such a system. The telecommunication system uses the same air interface for directly connecting the mobile clients to the base station as well as for the ad-hoc network for connecting the mobile client to the base station via the mobile relays. However, using the air interface for the ad-hoc network has the disadvantage that for the signaling and user data relayed in the ad-hoc network specific time slots and frequencies or calling channels have to be located and provided by the base station usable by the mobile client and the mobile relays to interact with one another. This requires a considerable amount of resources at the base station and within the cellular network. Finally, that leads to a reduction of the number of mobile clients which can be administered and operated by a base station within a cell.

Therefore, it is an object of the present invention to provide a possibility to enhance the number of mobile clients which can be administered and operated by a base station within a cell, thereby offering to the operators of cellular networks to reduce costs.

This object is solved by a method of the above-mentioned kind characterized in that
- the signaling data is directly exchanged across a control channel of the first connection both during establishing the second connection and during maintaining the second connection;
- a connection as part of the second connection is established between the mobile client and a mobile relay across an ad-hoc network, the mobile relay being connected to the ad-hoc network and the cellular network; and
- at least part of the user data to be transmitted between the mobile client and the cellular network is transmitted across the second connection.

It is possible, that the communication between the mobile relay and the mobile client takes place across a number of intermediate so called ad-hoc terminals such that the data that are transmitted from the mobile terminal and that are dedicated to the cellular network (or vice versa) are forwarded several times by intermediate ad-hoc terminals between the mobile client and the mobile relay. This is called a multi-hop ad-hoc connection.

According to the present invention all the signaling data exchanged between the mobile client and the cellular network is transmitted across the air interface and not across the ad-hoc network. This has the advantage that even if the connection between the mobile client and the mobile relay or between one or more of a number of connections between different mobile relays via the ad-hoc network is interrupted, a new connection via the ad-hoc network can be established within a very short period of time because the signaling data necessary for establishing the connection is still available because they are transmitted across the first connection via the air interface.

According to the present invention, the main procedures like establishment of data bearers, handover control, measurement exchange, reconfiguration of data bearers, etc. are all carried by means of the signalling connection established through the direct cellular connection. In contrast thereto, according to WO 00/54539, these procedures are all established through the ad-hoc extension.

Ad-hoc networks typically are of limited coverage and/or of limited capacity. If, for example, the ad-hoc network is realized by BlueTooth, the distance between the mobile client and the mobile relay or between various mobile relays, respectively, is only allowed to be in the range of some meters. Thus, if a mobile client is connected to the cellular network via an ad-hoc interface and a mobile relay, there is a likelihood that the mobile client leaves the region that is covered by the ad-hoc network. This means, that the connection between the mobile client and the mobile relay will be aborted and that another connection has to be established. This can be achieved much quicker and more effectively with the present invention.

It can also cause an abortion, if the mobile relay leaves the region that is covered by the ad-hoc network or if the mobile relay stops the relaying of data, e.g. because the mobile relay is switched off, a hardware failure occurs, or simply because of battery shortage.

An abortion of the ad-hoc network may also lead to an abortion of the connection between the mobile client and the cellular network since the cellular network gets no longer any response from the mobile client and therefore it will abort the connection. In this case, the connection between the mobile client and the cellular network must be reestablished either directly or through the ad-hoc network. This can be achieved much quicker and more effectively with the present invention.

Each abortion causes a certain delay which is an overhead in time. This is due to the fact, that it takes time to recognize the abortion, to find another mobile relay, to establish the ad-hoc connection to the other mobile relay, to establish a connection from the mobile relay to the cellular network, to establish the relayed connection between the mobile client and the cellular network and to start data transmission from where it was aborted. This can be achieved much quicker and more effectively with the present invention. Hence, the present invention can enhance the reliability of an ad-hoc network extension.

Moreover, if the connection is aborted in a way described above, there is the possibility of data loss. Even if an error detection mechanism is involved and can save the data transmission from data loss, it will take time and resources to detect which data are endangered to be lost and to perform appropriate actions, like a retransmission of these data after a new connection is established. Due to the fact that according to the invention re-establishing of the connection via the ad-hoc network is affected quicker, the possibility of data loss is reduced to a minimum.

The negative effects due to an abortion of the ad-hoc network can increase significantly if the mobile client is located within the peripheral zone of the ad-hoc network. In the peripheral zone the signal quality typically varies over time. Thus, it is conceivable that the ad-hoc network connection between the mobile client and the mobile relay is aborted due to a bad signal quality and shortly after the abortion the signal quality will increase, such that again a connection will be established between the mobile client and the same mobile relay as before. If the signal quality decreases again, the connection will be aborted and so forth. In particular in these cases the present invention has an enormous advantage in respect to the prior art.

Further, the likelihood of an abortion increases, if the mobile client is connected to the mobile relay via a multi-hop connection. In a multi-hop connection besides the mobile client and the mobile relay several other mobile terminals are involved. These mobile terminals are connected with each other and/or with the mobile client and/or the mobile relay via the ad-hoc network or even via various ad-hoc networks. Thus, the likelihood of an abortion of one connection may increase with the number of mobile terminals involved. In particular in these cases the present invention has an enormous advantage in respect to the prior art.

Signaling data deal with subjects like handover control (including macro diversity), power control, exchange of measurements between network and terminals, mobility and location management. In particular, signaling data are used to establish and control a connection between the mobile client and the cellular network. In case of an abortion of the ad-hoc network connection the mobile client can inform the cellular network (e.g. the RNC) through signaling data that the ad-hoc network connection is aborted and a new ad-hoc network connection to the same or to another mobile relay has to be established so that the data transmission can be continued. It is also conceivable, that the cellular network informs the mobile client about the abortion of,the ad-hoc network, e.g. in case the cellular network detects a failure in the mobile relay.

Making the transmission of signaling data independent of the reliability of the ad-hoc network connection enables the mobile client in case of an abortion of the ad-hoc network e.g.
- to inform the cellular network of whether the mobile client wants to abort the connection between the mobile client and the cellular network at all or not;
- to request the cellular network to wait until the ad-hoc network connection is reestablished (maybe via another mobile relay); and/or
- to suggest or to allow to switch to a direct transmission mode wherein all data are transmitted directly via the air-interface until the ad-hoc network connection is reestablished.

It also enables the cellular network e.g.
- to inform the mobile client of whether the cellular network wants to abort the connection to the mobile client at all or not;
- to inform the mobile client about how long the cellular network will wait for reestablishing the ad-hoc network connection; and/or
- to suggest or to allow to switch to a direct transmission mode wherein all data are transmitted directly via the air-interface until the ad-hoc network connection is reestablished.

Since the abortion of an ad-hoc connection does not affect the transmission of signaling data, the abortion of the ad-hoc network does not necessarily cause a total abortion of the connection between the mobile client and the cellular network. Instead, the data transmission connection between the mobile client and the cellular network can switch to a so called wait-state until the ad-hoc network connection is reestablished or can switch to a direct data transmission via the air-interface for all data until the ad-hoc network connection is reestablished.

This significantly reduces the overhead induced by the abortion of the ad-hoc network connection, since according to the present invention the abortion of the ad-hoc network connection not necessarily causes a total abortion of the connection between the mobile client and the cellular network. Thus, there is no time needed to reestablish the connection between the mobile client and the cellular network. Moreover, this embodiment induces the possibility to transmit all data directly via the air-interface until the ad-hoc network is reestablished.

An Example of the mode of operation of an ad-hoc network according to the present invention is described in the European patent application 04 291 664 "Air interface protocols for a radio access network with ad-hoc extensions" that has the same applicant as the present invention.

Extending a cellular network by an ad-hoc network according to the present invention results in an improvement of cell capacity and coverage. The capacity of a base station is highly dependent on the distance of the mobile clients to the base station and, consequently, on the quality of the connection between the mobile clients and the base station. If, for example, a mobile terminal is placed far away (in terms of reception level, and not necessarily physical distance) from a Node B that is in charge of one or several of the cells in the active set of the mobile terminal, it transmits data with a very high transmission power. This in turn can interfere with other data transmissions in the same or adjacent cells. Using an ad-hoc network extension and having a mobile relay within reach of the mobile terminal, the mobile relay can connect to a Node B with a higher quality and lower transmission power than the mobile terminal. Thus the coverage can be raised and the risk of interference with other connections will be reduced.

By transmitting at least some of the user data across the ad-hoc network, the data rate necessary for data transmission via the air interface is reduced. Because each mobile client requires a smaller data rate, the total data rate made available by the base station can be split up among a larger number of mobile clients. Hence, the base station's resources are divided among a larger number of mobile clients without any loss in the quality of connection.

Since one mobile relay can in principle relay the data transmitted from different mobile terminals at a given time, the coverage can be increased further on.

An important aspect of the present invention is the use of separate connections for user data and for signaling data. In particular, separate connections are used for user data on the one hand and dedicated signaling data on the other hand. All the dedicated signaling data is directly exchanged between the mobile client and the cellular network (or the base station) across the air interface via the first connection. For that purpose a dedicated control channel (DCCH) is established across the first connection. Once a DCCH is established, the DCCH is used to exchange all kind of dedicated signaling data between the mobile client and the cellular network. This includes many kinds of signaling procedures, like establishment of data connections, handover control, measurement exchange, etc.

The present invention also allows to transmit all data that are transmitted in one direction (either from the mobile client to the cellular network or from the cellular network to the mobile client) together either via the air interface or via the ad-hoc network and the mobile relay, whereas the data that are transmitted in the other direction are split in a first part and a second part such that the first part is transmitted directly via the air-interface and the second part is transmitted via the ad-hoc interface.

The present invention therefore introduces maximum flexibility in deciding separately for each direction (mobile client to cellular network and vice versa), which kind of data have to be transmitted via the ad-hoc network and which kind of data have to be transmitted directly. If, for example, the mobile client is powered by battery wherein the battery is nearly discharged and assuming, that it takes more energy to send data directly than to send these data via the ad-hoc network but it takes less energy to receive data directly than via the ad-hoc network, then - in order to save battery power - it is possible that a major part of the data is transmitted from the mobile client to the cellular network via the ad-hoc network and a major part of the data is transmitted from the cellular network to the mobile client directly via the air interface.

The present invention further allows that the first connection comprises a dedicated control channel (DCCH) for exchanging dedicated signaling data between the mobile client and the cellular network. Preferably, only the dedicated signaling data (which in UMTS refers to all signaling data transmitted across the DCCH) is transmitted via the air interface while all the other signaling data, optionally common signaling data (transmitted across the CCCH, BCCH, etc.) can be transmitted across the ad-hoc network. Common signaling data relate to e.g. system information, i.e. information related to the radio environment like the code values in the cell and in the adjacent cells, power levels for open loop power control or location updates that are broadcasted by the cellular network via the BCCH. Cell Broadcast Services (CBS), consisting of the delivery of short text messages to all users or to the subscribed users in a cell via the CTCH, can be handled in the same manner as common signaling.

Preferably, at least a part of time-critical user data that are transmitted from the mobile client and dedicated to the cellular network are transmitted directly via the air interface from the mobile client to the cellular network and/or at least a part of time-critical user data that are transmitted from the cellular network and dedicated to the mobile client are transmitted directly via the air interface from the cellular network to the mobile client. This preserves the quality of data transmission between the mobile client and the cellular network, since an abortion of the ad-hoc network will not affect the transmission of time-critical data. Nevertheless, data that are not time-critical are transmitted via the ad-hoc network, thus aiding in increasing the capacity of the air-interface of the cellular network.

In a preferred embodiment of the invention at least a part of packet-switched user data that are transmitted from the mobile client and that are dedicated to the cellular network are transmitted via the ad-hoc network and the mobile relay to the cellular network and/or at least a part of packet-switched user data that are transmitted from the cellular network and dedicated to the mobile client are transmitted via the mobile relay and the ad-hoc network to the mobile client.

Packet-switched data are transmitted packet-wise. This means, that each packet is transmitted in some sense independent of the other packets. For example, in a packet-switched network different packets can take different routes from a sender to a receiver. The receiver collects the packets, puts them in the right order and restores the original information. If a packet is lost, there exist mechanisms to request a retransmission of this specific packet basically without having the necessity to stop the whole process of transmission and to retransmit all packets that were sent after the lost packet.

Transmitting packet-switched data via the ad-hoc interface means that in case of an abortion the packets can be retransmitted via another ad-hoc network causing only little overhead. This embodiment also opens the possibility in case of an abortion of the ad-hoc network to transmit the packets via the air interface until the ad-hoc network extension is reestablished or another ad-hoc network extension is established. In the case of packet-switched data the switching between transmitting data via the ad-hoc network extension or transmitting data directly via the air interface can be performed very fast. This again reduces the time consuming effect of an abortion of the ad-hoc network connection.

Further, it is suggested that the ad-hoc network connection between the mobile client and the mobile relay and the first connection between the mobile client and the cellular network are established using different technologies. Preferably, the first connection is established using a technology for mobile radio communication, in particular according to a GSM (Global System for Mobile Communications)- or an UMTS (Universal Standard for Telecommunication Services)-standard. Preferably, the ad-hoc network connection is established using a technology for local wireless networks, in particular according to a WLAN (Wireless Local Area Network) or a BlueTooth-standard.

The object of the present invention is also solved by mobile client as mentioned above according to one of the claims 9 to 13.

Furthermore, the object of the present invention is solved by a telecommunications system as mentioned above according to claim 14 or 15.

Finally, the object of the present invention is solved by a computer program according to one of the claims 16 to 18.

Further features and advantages of the present invention are explained in more detail below with reference to the accompanying drawings. The figures show:
- Figure 1: a general view of a cellular network extended by an ad-hoc network;
- Figure 2: a general view of a cellular network extended by an ad-hoc network where the mobile client and the mobile relay are connected to different Node Bs;
- Figure 3: a general view of the data flow of the first part and the second part of the transmitted data;

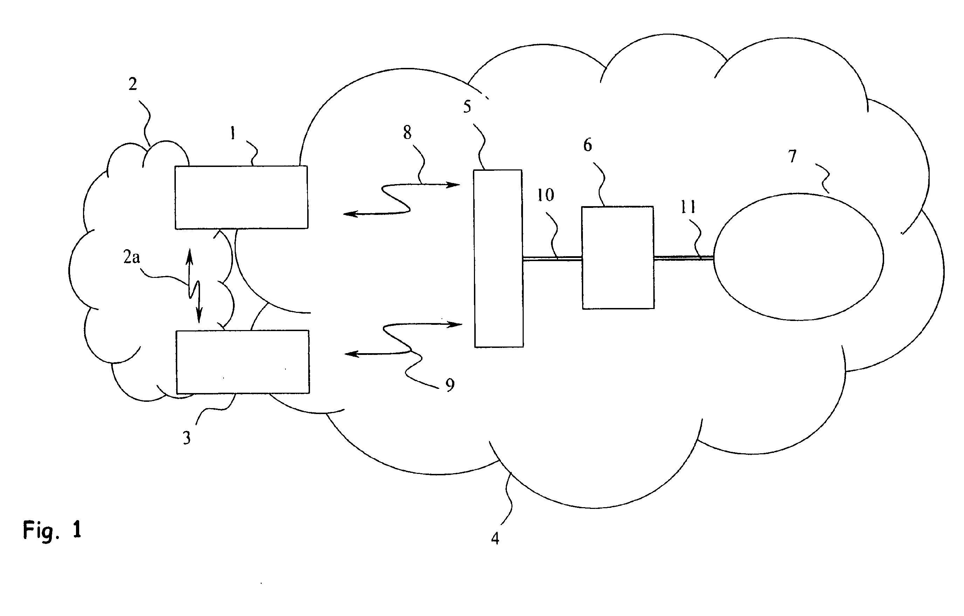

Figure 1 shows a mobile client 1 that communicates via an ad-hoc network 2 with a mobile relay 3 using an ad-hoc network interface 2a. The mobile relay 3 is connected to a cellular network 4, e.g. a UMTS cellular network 4, via a radio link that is accessible via an air interface 9 (e.g. Uu in UMTS). The cellular network 4 includes a Node B 5, a Radio Network Controller (RNC) 6 and a Core Network 7. The Node B 5 is a physical unit for radio transmission (and reception) and is attached to one or more cells of the cellular network 4. Typically, several Node Bs 5 are associated with one RNC 6 and are controlled by this RNC 6. Particularly, the control includes the management of resources in the Node Bs 5.

The mobile client 1 communicates directly with at least one Node B 5 via a radio link that is accessible via an air interface 8 (e.g. Uu in UMTS). It is also possible to communicate with several Node Bs in parallel (in case of soft handover). The mobile relay 3 communicates with the Node B 5 via the radio link that is also accessible via the air interface 9. The Node B 5 communicates with the RNC 6 via the so-called Iub interface 10, making use of an underlying transmission network, which is usually a terrestrial network. The Node B 5 is controlled by the RNC 6. Both are part of the Radio Access Network (RAN). In UTRAN (the RAN of the UMTS cellular network 4) the transmission network can be based on ATM or IP transport. Finally, the communication between an RNC 6 and the Core Network 7 (and hence between RAN and CN) takes place across a so-called Iu interface 11, which makes use of an underlying ATM-based or IP-based backbone.

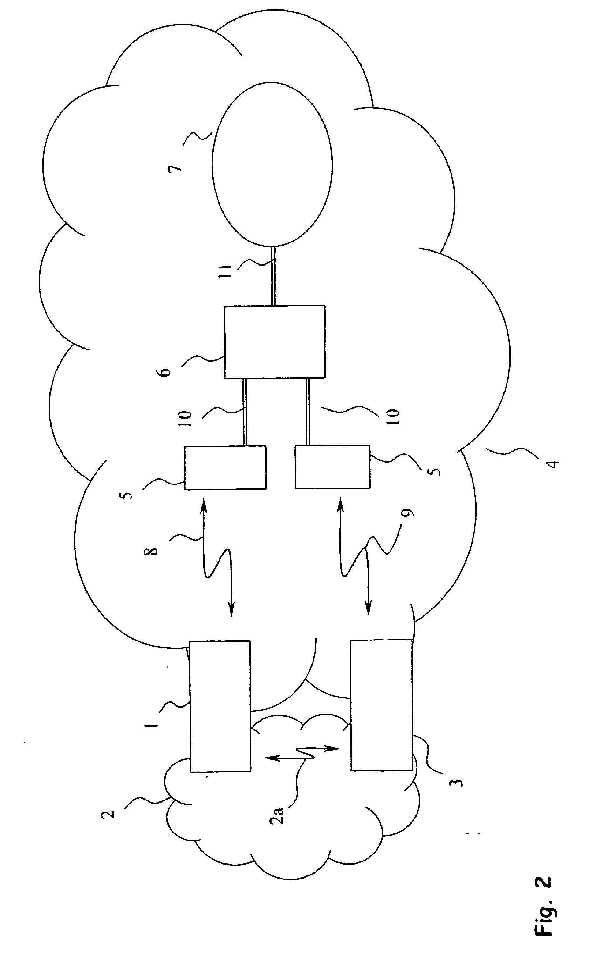

Figure 2 shows a variation of the cellular network 4 that is extended by the ad-hoc network 2. Here, the mobile client 1 and the mobile relay 3 communicate with different Node Bs. This reflects the case, that the mobile client 1 and the mobile relay 3 reside in different cells of the cellular network 4. In the situation shown in Figure 2, both Node Bs 5 are connected via the transmission network 10 with the same RNC 6. But it is also conceivable, that the different cells in which the mobile client 1 and the mobile relay 3 reside are controlled by different RNCs 6, such that the Node Bs 5 are connected via the transmission network 10 with different RNCs 6. In case the different RNCs 6 belong to different Radio Network Subsystems (RNS) they communicate with each other using the Iur interface.

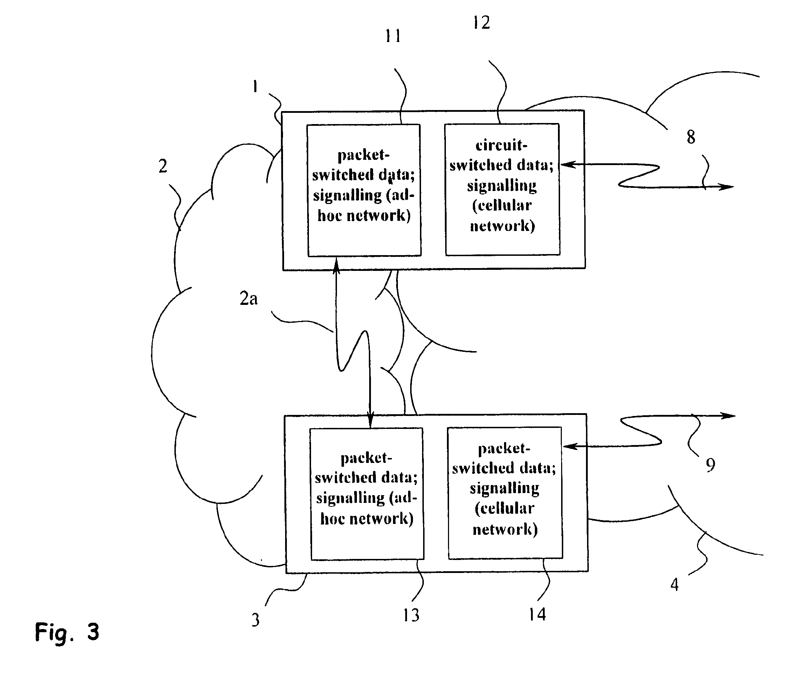

Figure 3 shows an example of the data flow between the mobile client 1 and the cellular network 4. The mobile client 1 comprises a first protocol stack 11 and a second protocol stack 12. The mobile relay 3 comprises a first protocol stack 13 and a second protocol stack 14.

The mobile client 1 communicates directly with the cellular network 4 - particularly with the Node B 5 - via the air interface 8. Signaling data, in particular dedicated signaling data, that are transmitted from the mobile client 1 to the cellular network 4 via the air interface 8 are generated by some higher layer of the second protocol stack 12 of the mobile client 1 and are passed down the layers of the second protocol stack 12 to the physical layer of the second protocol stack 12. The physical layer deals with specific physical features of the air interface 8 and causes the transmission of the data from the mobile client 1 towards the cellular network 4 - particularly towards Node B 5.

Almost concurrently, the mobile client 1 communicates with the mobile relay 3 via the ad-hoc network 2. Data, in particular part of the user data and optionally common signaling data, that are transmitted from the mobile client 1 to the cellular network 4 via the ad-hoc network 2 and the mobile relay 3 are generated by an application or some higher layer of the first protocol stack 11 of the mobile client 1.

Data transmitted from the mobile client 1 via the ad-hoc network are received by the mobile relay 3 via some layers of the first protocol stack 13 and passed up to higher layers of the first protocol stack and/or transferred to some predefined layers of the second protocol stack 14. The received data are thus processed, terminated and/or relayed. In the latter case, the second protocol stack 14 causes a predefined part of the data to be transmitted to the cellular network 4 via the air interface 9.

A detailed description of an example of the protocol stacks and the data flow between the mobile client 1 and the mobile relay 3 is given in the European patent application 04 291 664 "Air interface protocols for a radio access network with ad-hoc extensions" that has the same applicant as the present invention. It is explicitly stated that the description given in the above mentioned application shall be viewed as part of this description.

Data, that are transmitted between the mobile client 1 and the cellular network 4 directly via the air interface are for example at least dedicated signaling data. In UMTS, dedicated signaling data are for example transmitted via the DCCH. The DCCH is mapped by the physical layer to a channel which causes the dedicated signaling data to be transmitted by the cellular network 4 towards the mobile terminals and in particular to the mobile client 1.

For its correct operation, the mobile client 1 requires also information sent on the paging control channel (PCCH), or on the common control channel (CCCH). For common signaling, it is possible to use either a direct cellular access (via a first connection) or a relayed connection (a second connection) to the associated physical channels (P-CCPCH, S-CCPCH, and PRACH). If signaling data (e.g. RRC messages associated to the mobile client 1) are transmitted via the ad-hoc network 2 and the mobile relay 3, these data are preferably encapsulated within signaling messages of the signaling protocol related to the ad-hoc network 2 connection between the mobile client 1 and the mobile relay 3. Intermediate solutions with direct access to some of these channels (e.g. P-CCPCH) and a relayed connection for other ones (e.g. S-CCPCH and PRACH) is also possible.

It is also conceivable, to transmit any signaling data, preferably the dedicated signaling data, directly between the mobile client 1 and the cellular network 4. This can be advantageous since these data are transmittable even in case of an abortion of the connection via the ad-hoc network 2. This enables the mobile client 1 to inform the cellular network 4 about an abortion of the ad-hoc network 2 and to request the cellular network (e.g. the RNC) not to abort the connection between the mobile client 1 and the cellular network 4 at all but rather to wait until another ad-hoc network 2 connection is established or the ad-hoc network 2 connection is re-established.

Furthermore, it is conceivable that the mobile client 1 and the cellular network 4 negotiate to transmit all kind of data directly via the air interface 8 until the ad-hoc network 2 connection is re-established or another ad-hoc network 2 connection is established.

In addition, figure 3 shows an embodiment of the invention where also the circuit-switched data are transmitted between the mobile client 1 and the cellular network 4 directly via the air interface 8. This can be especially favorable if the circuit-switched data refer to time-critical data where a delay due to an abortion of the ad-hoc network 2 would not be tolerable. In the worst case, even the small amount of delay introduced by the relaying mechanism itself may be unacceptable. Hence, in that case the packet-switched user data, in particular the non-time-critical user data would be transmitted via one or more mobile relays 3 across the ad-hoc network 2.

Data transmitted between the mobile client 1 and the mobile relay 3 via the ad-hoc network 2 are at least signaling data that refer to the ad-hoc network 2 itself. As shown in figure 3, in addition packet-switched data are transmitted via the ad-hoc network 2 and the mobile relay 3. Packet-switched data are predominantly not very sensitive to delay. Moreover, packet-switched data are designed to be transmittable via different routes and thus via different network connections. In case of an abortion of the ad-hoc network 2 the transmission of the packet-switched data can be stalled until another ad-hoc network 2 connection is established or the same ad-hoc network 2 is re-established. Meanwhile, the mobile client 1 and the cellular network 4 can decide to transmit the packet-switched data directly via the air interface 8.

However, it is possible, that even packet-switched data are time-critical (e.g. data of VoIP-applications). This means, that the mobile client 1 and the cellular network 4 can determine to transmit at least time-critical packet-switched data directly via the air interface 8 as long as the ad-hoc network 2 connection is aborted. It is also conceivable to transmit time-critical packet-switched data always directly between the mobile client 1 and the cellular network 4 and to transmit only packet-switched data that are not time-critical via the ad-hoc network 2 and the mobile relay 3.

It is furthermore conceivable, to transmit any time-critical data - independent of whether these data are circuit-switched or packet-switched - directly via the air interface 8 and/or to transmit any data that are not time-critical - independent of whether these data are circuit-switched or packet-switched -via the ad-hoc network 2.

The data flow between the mobile client 1 and the cellular network 4 via the ad-hoc network 2 connection and directly via the air interface 8 is described exemplarily by a variety of different data:
Signaling between mobile client 1 and mobile relay 3 according to the ad-hoc network 2 is generated and processed by the first protocol stacks 11 and 13 of the mobile client 1 and the mobile relay 3 and is transmitted via the ad-hoc network 2.
Signaling between the mobile client 1 and the cellular network 4 is generated and processed by the second protocol stack 12 and an appropriate protocol stack of one or more components of the cellular network 4, e.g. the Node B 5 and the RNC 6. In particular, it is conceivable that at least dedicated signaling data are transmitted from the cellular network 4 towards the mobile client 1 directly via the air interface 8. The concurrent use of the direct cellular link (via the air interface 8) and the link via the ad-hoc network 2 and the mobile relay 3 allows different configurations according to whether both dedicated and common signaling, or only dedicated signaling are sent via the direct cellular connection (e.g. the air interface 8). Since dedicated signaling is usually more critical, it justifies the use of a direct connection. However, common and shared channels are present in a cell independently of its access by the mobile client 1. Therefore, transmitting common and shared signaling via the direct cellular connection does not require additional power or radio resources.
Signaling between the mobile relay 3 and the cellular network 4 is generated and processed by the second protocol stack 14 and an appropriate protocol stack of one or more components of the cellular network 4, e.g. the Node B 5 and the RNC 6.
Time-critical data are transmitted directly between the mobile client 1 and the cellular network 4. It is also conceivable, to transmit time-critical data via the ad-hoc network 2 whenever it is available and to switch to a direct transmission via the air interface 8 in case of an abortion of the ad-hoc network 2.
Circuit-switched data are transmitted directly between the mobile client 1 and the cellular network 4. It is conceivable, to transmit circuit-switched data via the ad-hoc network 2 whenever it is available and to switch to a direct transmission via the air interface 8 in case of an abortion of the ad-hoc network 2. It is also conceivable to distinguish between time-critical circuit-switched data and circuit switched data, that are not time-critical. This could mean for example, that only time-critical circuit-switched data are transmitted directly between the mobile client 1 and the cellular network 4 whereas circuit-switched data that are not time-critical are transmitted via the ad-hoc network 2. This could also mean, that in case of transmitting even time-critical circuit-switched data via the ad-hoc network 2 only time-critical circuit-switched data are transmitted directly if an abortion of the ad-hoc network 2 occurs.
Packet-switched data are transmitted via the ad-hoc network 2 and the mobile relay 3. It is conceivable, to stall the transmission in case an abortion of the ad-hoc network 2 occurs and to start transmission again, if the ad-hoc network 2 has been reestablished or another ad-hoc network 2 has been established. It is also conceivable, to transmit packet-switched data via the ad-hoc network 2 whenever it is available and to switch to a direct transmission (possibly after a predefined amount of time has elapsed) via the air interface 8 in case of an abortion of the ad-hoc network 2. It is also conceivable to distinguish between time-critical packet-switched data and packet-switched data, that are not time-critical. This could mean for example, that only time-critical packet-switched data are transmitted directly between the mobile client 1 and the cellular network 4 whereas packet-switched data that are not time-critical are transmitted via the ad-hoc network 2. This could also mean, that in case of transmitting even time-critical packet-switched data via the ad-hoc network 2 only time-critical packet-switched data are transmitted directly if an abortion of the ad-hoc network 2 occurs.

It is conceivable that only in one direction - either from the mobile client 1 to the cellular network 4 or vice versa - a first part of the data are transmitted directly and the second part is transmitted via the ad-hoc network 2 extension, whereas in the other direction all data are transmitted directly via the air interface 8 or all data are transmitted via the ad-hoc network 2 interface. This could be realized in that only the dedicated signaling data, that are transmitted from the cellular network 4 to the mobile client 1 are transmitted directly whereas all other data in both directions are relayed via the ad-hoc network 2 and the mobile relay 3. Of course, the data that are to be transmitted can be divided into a first part and into a second part according to various considerations, eventually much more sophisticated than the criteria (signaling related, dedicated signaling related, packet-switched, circuit-switched, time-critical) described so far.

Several different combinations are conceivable and may be reasonable according to special requirements of the cellular network, the ad-hoc network 2, the data to be transmitted, applications and/or user needs.

An important aspect of the present invention is the use of separate connections for user data and for signaling data. In particular, separate connections are used for user data on the one hand and dedicated signaling data on the other hand, with the common signaling data using any of both connections. The dedicated signaling data is directly exchanged between the mobile client and the cellular network (or the base station) across the air interface 8 via the first connection. For that purpose a dedicated control channel (DCCH) is established across the first connection. Once a DCCH is established, the DCCH is used to exchange all kind of dedicated signaling data between the mobile client 1 and the cellular network 4. This includes many kinds of signaling procedures, like establishment of data connections, handover control, measurement exchange, etc. Whereas the common signaling data and the user data are at least partly transmitted via the ad-hoc network 2 and relayed by one or more mobile relays 3.

Preferably, the ad-hoc network 2 connection (making part of the second connection) between the mobile client 1 and the mobile relay 3 (or between a number of mobile relays 3) and the first connection between the mobile client 1 and the cellular network 4 are established using different technologies. Preferably, the first connection is established using a technology for mobile radio communication, in particular according to a GSM (Global System for Mobile Communications)- or an UMTS (Universal Standard for Telecommunication Services)-standard. Preferably, the ad-hoc network connection is established using a technology for local wireless networks, in particular according to a WLAN (Wireless Local Area Network) or a BlueTooth-Standard.

## Claims

1. A method for transmitting user data between a mobile client (1) and a cellular network (4) the method comprising the steps of:
- establishing a first connection between the mobile client (1) and the cellular network (4) via an air interface (8) for exchanging signaling data between the mobile client (1) and the cellular network (4);
- establishing a second connection between the mobile client (1) and the cellular network (4) according to the exchanged signaling data; and
- maintaining the second connection and transmitting the user data between the mobile client (1) and the cellular network (4) across the second connection,
**characterized in that**
- the signaling data is exchanged across a control channel of the first connection both during establishing the second connection and during maintaining the second connection;
- a connection as part of the second connection is established between the mobile client (1) and a mobile relay (3) across an ad-hoc network (2), the mobile relay (3) being connected to the ad-hoc network (2) and the cellular network (4); and
- at least part of the user data to be transmitted between the mobile client (1) and the cellular network (4) is transmitted across the second connection.

2. The method of claim 1, wherein the first connection comprises a dedicated control channel (DCCH) for exchanging dedicated signaling data between the mobile client (1) and the cellular network (4).

3. The method of claim 1 or 2, wherein the entire signaling data to be exchanged between the mobile client (1) and the cellular network (4) both during establishing the second connection and during maintaining the second connection is directly exchanged across the first connection.

4. The method of one of the claims 1 to 3, wherein the ad-hoc network (2) connection between the mobile client (1) and the mobile relay (3) and the first connection between the mobile client (1) and the cellular network (4) are established using different technologies.

5. The method of claim 4, wherein the first connection is established using a technology for mobile radio communication, in particular according to a GSM (Global System for Mobile Communications)- or an UMTS (Universal Standard for Telecommunication Services)-standard.

6. The method of claims 4 or 5, wherein the ad-hoc network (2) connection is established using a technology for local wireless networks, in particular according to a WLAN (Wireless Local Area Network) or a BlueTooth-standard.

7. The method of one of the claims 1 to 6, wherein
- at least a part of time-critical user data that are transmitted from the mobile client (1) and dedicated to the cellular network (4) are transmitted directly via the air interface (8) from the mobile client (1) to the cellular network (4) and/or
- at least a part of time-critical user data that are transmitted from the cellular network (4) and dedicated to the mobile client (1) are transmitted directly via the air interface (8) from the cellular network (4) to the mobile client (1).

8. The method of one of the claims 1 to 7, wherein
- at least a part of packet-switched user data that are transmitted from the mobile client (1) and dedicated to the cellular network (4) are transmitted via the ad-hoc network (2) and the mobile relay (3) to the cellular network (4) and/or
- at least a part of packet-switched user data that are transmitted from the cellular network (4) and dedicated to the mobile client (1) are transmitted via the mobile relay (3) and the ad-hoc network (2) to the mobile client (1).

9. A mobile client (1) comprising an air interface (8) for directly connecting the mobile client (1) to a cellular network (4) for exchanging signaling data across a first connection and comprising an ad-hoc network interface for connecting the mobile client (1) to an ad-hoc network (2) for data transmission across a second connection, **characterized in that**
- the air interface (8) is adapted for directly exchanging the signaling data across a control channel of the first connection both during establishing the second connection and during maintaining the second connection;
- the ad-hoc network interface is adapted for establishing a connection between the mobile client (1) and a mobile relay (3) connected to the ad-hoc network (2) and the cellular network (4), the connection making part of the second connection; and
- the ad-hoc network interface is adapted for transmitting at least part of user data to be transmitted between the mobile client (1) and the cellular network (4) across the second connection.

10. The mobile client (1) of claim 10, wherein the air interface (8) and the ad-hoc network interface are separate interfaces.

11. The mobile client (1) of claim 11, wherein the air interface (8) and the ad-hoc network interface are technologically different interfaces.

12. The mobile client (1) of claims 10 to 12, wherein the air interface (8) is a mobile radio communication interface for transmitting data in particular according to a GSM (Global System for Mobile Communications)- or an UMTS (Universal Standard for Telecommunication Services)-standard.

13. The mobile client (1) of claims 10 to 13, wherein the ad-hoc network (2) interface is a local wireless network interface for transmitting data in particular according to a WLAN (Wireless Local Area Network) or a BlueTooth-Standard.

14. Telecommunications system comprising:
- a cellular network (4),
- an ad-hoc network (2),
- a mobile client (1) connected to the cellular network (4) and to the ad-hoc network (2),
- a mobile relay (3) connected to the cellular network (4) and to the ad-hoc network (2),
- a first connection established between the mobile client (1) and the cellular network (4) via an air interface (8) for exchanging signaling data between the mobile client (1) and the cellular network (4),
- a second connection established between the mobile client (1) and the cellular network (4) across the ad-hoc network (2) and the mobile relay (3) for transmission of user data between the mobile client (1) and the cellular network (4), **characterized in that**
- the air interface (8) is adapted for directly exchanging the signaling data across a control channel of the first connection both during establishing the second connection and during maintaining the second connection;
- the mobile client (1) comprises an ad-hoc network interface adapted for establishing a connection between the mobile client (1) and the mobile relay (3) the connection making part of the second connection; and
- the ad-hoc network interface is adapted for transmitting at least part of user data to be transmitted between the mobile client (1) and the cellular network (4) across the second connection.

15. The telecommunications system of claim 15, wherein the telecommunications system comprises means for executing a method according to one of the claims 1 to 9.

16. Computer program adapted to be run on a data processing unit, in particular on a mobile client (1) and/or a mobile relay (3), **characterized in that** the computer program is programmed to perform a method according to one of the claims 1 to 9, if the computer program is run on the data processing unit.

17. Computer program of claim 17, **characterized in that** the computer program is stored on a storage device, in particular a random access memory (RAM), a read only memory (ROM) or a flash memory.

18. Computer program of on of the claims 17 or 18, **characterized in that** the computer program is stored on a compact disc (CD), a digital versatile disc (DVD) or a hard disc.

## Patentansprüche

1. Verfahren zur Übertragung von Benutzerdaten zwischen einem mobilen Client (1) und einem zellularen Netz (4), wobei das Verfahren die Schritte umfasst:
- des Aufbauens einer ersten Verbindung zwischen dem mobilen Client (1) und dem zellularen Netz (4) über die Luftschnittstelle (8) zum Austauschen von Signalisierungsdaten zwischen dem mobilen Client (1) und dem zellularen Netz (4);
- des Aufbauens einer zweiten Verbindung zwischen dem mobilen Client (1) und dem zellularen Netz (4) entsprechend den ausgetauschten Signalisierungsdaten; und
- des Aufrechterhaltens der zweiten Verbindung und des Übertragens der Benutzerdaten zwischen dem mobilen Client (1) und dem zellularen Netz (4) über die zweite Verbindung,
**dadurch gekennzeichnet, dass**
- die Signalisierungsdaten über einen Steuerkanal der ersten Verbindung ausgetauscht werden, und zwar sowohl während des Aufbaus der zweiten Verbindung als auch während des Aufrechterhaltens der zweiten Verbindung;
- eine zur zweiten Verbindung gehörende Verbindung zwischen dem mobilen Client (1) und einer mobilen Zwischenstation (3) über ein Ad-hoc-Netz (2) aufgebaut wird, wobei die mobile Zwischenstation (3) mit dem Ad-hoc-Netz (2) und dem zellularen Netz (4) verbunden ist; und
- mindestens ein Teil der Benutzerdaten, die zwischen dem mobilen Client (1) und dem zellularen Netz (4) zu übertragen sind, über die zweite Verbindung übertragen wird.

2. Verfahren nach Anspruch 1, wobei die erste Verbindung einen dedizierten Steuerkanal (DCCH) zum Austauschen dedizierter Signalisierungsdaten zwischen dem mobilen Client (1) und dem zellularen Netz (4) umfasst.

3. Verfahren nach Anspruch 1 oder 2, wobei die gesamten Signalisierungsdaten, die zwischen dem mobilen Client (1) und dem zellularen Netz (4) sowohl während des Aufbaus der zweiten Verbindung als auch während des Aufrechterhaltens der zweiten Verbindung auszutauschen sind, direkt über die erste Verbindung ausgetauscht werden.

4. Verfahren nach einem der Ansprüche 1 bis 3, wobei die Verbindung über das Ad-hoc-Netz (2) zwischen dem mobilen Client (1) und der mobilen Zwischenstation (3) und die erste Verbindung zwischen dem mobilen Client (1) und dem zellularen Netz (4) unter Verwendung unterschiedlicher Technologien aufgebaut werden.

5. Verfahren nach Anspruch 4, wobei die erste Verbindung mit Hilfe einer Technologie für die Mobilfunkkommunikation, insbesondere nach einer GSM-("Global System for Mobile Communications") oder einer UMTS- ("Universal Standard for Telecommunications Services") Norm, aufgebaut wird.

6. Verfahren nach Anspruch 4 oder 5, wobei die Verbindung über das Ad-hoc-Netz (2) mit Hilfe einer Technologie für lokale drahtlose Netze, insbesondere nach einer WLAN- ("Wireless Local Area Network") oder einer BlueTooth-Norm, aufgebaut wird.

7. Verfahren nach einem der Ansprüche 1 bis 6, wobei
- zumindest ein Teil der zeitkritischen Benutzerdaten, die vom mobilen Client (1) übertragen werden und die für das zellulare Netz (4) bestimmt sind, vom mobilen Client (1) direkt über die Luftschnittstelle (8) an das zellulare Netz (4) übertragen werden; und/oder
- zumindest ein Teil der zeitkritischen Benutzerrdaten, die vom zellularen Netz (4) übertragen werden und die für den mobilen Client (1) bestimmt sind, vom zellularen Netz (4) direkt über die Luftschnittstelle (8) an den mobilen Client (1) übertragen werden.

8. Verfahren nach einem der Ansprüche 1 bis 7, wobei
- zumindest ein Teil der paketvermittelten Benutzerdaten, die vom mobilen Client (1) übertragen werden und die für das zellulare Netz (4) bestimmt sind, über das Ad-hoc-Netz (2) und die mobile Zwischenstation (3) an das zellulare Netz (4) übertragen werden; und/oder
- zumindest ein Teil der paketvermittelten Benutzerdaten, die vom zellularen Netz (4) übertragen werden und die für den mobilen Client (1) bestimmt sind, über die mobile Zwischenstation (3) und das Ad-hoc-Netz (2) an den mobilen Client (1) übertragen werden.

9. Mobiler Client (1), umfassend eine Luftschnittstelle (8) für eine direkte Verbindung des mobilen Client (1) mit einem zellularen Netz (4) zum Austauschen von Signalisierungsdaten über eine erste Verbindung und umfassend eine Schnittstelle zu einem Ad-hoc-Netz für eine Verbindung des mobilen Client (1) mit einem Ad-hoc-Netz (2) zur Datenübertragung über eine zweite Verbindung, **dadurch gekennzeichnet, dass**
- die Luftschnittstelle (8) dafür geeignet ist, die Signalisierungsdaten sowohl während des Aufbaus der zweiten Verbindung als auch während des Aufrechterhaltens der zweiten Verbindung direkt über einen Steuerkanal der ersten Verbindung auszutauschen;
- die Schnittstelle zum Ad-hoc-Netz dafür geeignet ist, eine Verbindung zwischen dem mobilen Client (1) und einer mobilen Zwischenstation (3) aufzubauen, die mit dem Ad-hoc-Netz (2) und mit dem zellularen Netz (4) verbunden ist, wobei die Verbindung Teil der zweiten Verbindung ist; und
- die Schnittstelle zum Ad-hoc-Netz dafür geeignet ist, zumindest einen Teil der zwischen dem mobilen Client (1) und dem zellularen Netz (4) zu übertragenden Benutzerdaten über die zweite Verbindung zu übertragen.

10. Mobiler Client (1) nach Anspruch 10, wobei die Luftschnittstelle (8) und die Schnittstelle zum Ad-hoc-Netz getrennte Schnittstellen sind.

11. Mobiler Client (1) nach Anspruch 11, wobei die Luftschnittstelle (8) und die Schnittstelle zum Ad-hoc-Netz technologisch unterschiedliche Schnittstellen sind.

12. Mobiler Client (1) nach Anspruch 10 bis 12, wobei die Luftschnittstelle (8) eine Mobilfunkkommunikationsschnittstelle zur Übertragung von Daten ist, insbesondere nach einer GSM- ("Global System for Mobile Communications") oder einer UMTS- ("Universal Standard for Telecommunications Services") Norm.

13. Mobiler Client (1) nach Anspruch 10 bis 13, wobei die Schnittstelle des Ad-hoc-Netzes (2) eine Schnittstelle eines lokalen drahtlosen Netzes zur Übertragung von Daten ist, insbesondere nach einer WLAN- ("Wireless Local Area Network") oder einer BlueTooth-Norm.

14. Telekommunikationssystem, umfassend:
- ein zellulares Netz (4);
- ein Ad-hoc-Netz (2);
- einen mobilen Client (1), der mit dem zellularen Netz (4) und mit dem Ad-hoc-Netz (2) verbunden ist;
- eine mobile Zwischenstation (3), die mit dem zellularen Netz (4) und mit dem Ad-hoc-Netz (2) verbunden ist;
- eine erste Verbindung, die zwischen dem mobilen Client (1) und dem zellularen Netz (4) über eine Luftschnittstelle (8) aufgebaut wird, um Signalisierungsdaten zwischen dem mobilen Client (1) und dem zellularen Netz (4) auszutauschen;
- eine zweite Verbindung, die die zwischen dem mobilen Client (1) und dem zellularen Netz (4) über das Ad-hoc-Netz (2) und die mobile Zwischenstation (3) für die Übertragung von Benutzerdaten zwischen dem mobilen Client (1) und dem zellularen Netz (4) aufgebaut wird, **dadurch gekennzeichnet, dass**
- die Luftschnittstelle (8) dafür geeignet ist, die Signalisierungsdaten sowohl während des Aufbaus der zweiten Verbindung als auch während des Aufrechterhaltens der zweiten Verbindung direkt über einen Steuerkanal der ersten Verbindung auszutauschen;
- der mobile Client (1) eine Schnittstelle zum Ad-hoc-Netzwerk umfasst, die dafür geeignet ist, eine Verbindung zwischen dem mobilen Client (1) und der mobilen Zwischenstation (3) aufzubauen, wobei die Verbindung Teil der zweiten Verbindung ist; und
- die Schnittstelle zum Ad-hoc-Netz dafür geeignet ist, zumindest einen Teil der zwischen dem mobilen Client (1) und dem zellularen Netz (4) zu übertragenden Benutzerdaten über die zweite Verbindung zu übertragen.

15. Telekommunikationssystem nach Anspruch 15, wobei das Telekommunikationssystem Mittel zur Ausführung eines Verfahrens nach einem der Ansprüche 1 bis 9 umfasst.

16. Computerprogramm, geeignet zur Ausführung auf einer Datenverarbeitungseinheit, insbesondere auf einem mobilen Client (1) und/oder auf einer mobilen Zwischenstation (3), **dadurch gekennzeichnet, dass** das Computerprogramm so programmiert ist, dass es ein Verfahren nach einem der Ansprüche 1 bis 9 ausführt, wenn das Programm auf der Datenverarbeitungseinheit ausgeführt wird.

17. Computerprogramm nach Anspruch 17, **dadurch gekennzeichnet, dass** das Computerprogramm in einer Speichervorrichtung gespeichert wird, insbesondere in einem Direktzugriffsspeicher (RAM), in einem Nur-Lese-Speicher (ROM) oder in einem Flash-Speicher.

18. Computerprogramm nach einem der Ansprüche 17 oder 18, **dadurch gekennzeichnet, dass** das Computerprogramm auf einer Compact Disc (CD) einer Digital Versatile Disc (DVD) oder einer Festplatte gespeichert wird.

## Revendications

1. Procédé de transmission de données d'utilisateur entre un client mobile (1) et un réseau cellulaire (2), le procédé comprenant les étapes ci-après :
- Établissement d'une première connexion entre le client mobile (1) et le réseau cellulaire (2) par le biais d'une interface radioélectrique (8) pour échanger des données de signalisation entre le client mobile (1= et le réseau cellulaire (4) ;
- Établissement d'une deuxième connexion entre le client mobile (1) et le réseau cellulaire (4) en fonction des données de signalisation échangées ; et
- maintien de la deuxième connexion et transmission des données d'utilisateur entre le client mobile (1) et le réseau cellulaire (4) à travers la deuxième connexion,
**caractérisé en ce que**
- les données de signalisation sont échangées à travers un canal de commande de la première connexion à la fois pendant l'établissement de la deuxième connexion et pendant le maintien de la deuxième connexion ;
- une connexion faisant partie de la deuxième connexion est établie entre le client mobile (1) et un relais mobile (3) à travers un réseau ad-hoc (2), le relais mobile (3) étant connecté au réseau ad-hoc (2) et au réseau cellulaire (4) ; et
- au moins une partie des données d'utilisateur à transmettre entre le client mobile (1) et le réseau cellulaire (4) est transmise à travers la deuxième connexion.

2. Procédé selon la revendication 1, dans lequel la première connexion comprend un canal de commande dédié (DCCH) pour échanger des données de signalisation dédiées entre le client mobile (1) et le réseau cellulaire (4).

3. Procédé selon la revendication 1 ou 2, dans lequel la totalité des données de signalisation à échanger entre le client mobile (1) et le réseau cellulaire (4) à la fois pendant l'établissement de la deuxième connexion et pendant le maintien de la deuxième connexion est échangée directement à travers la première connexion.

4. Procédé selon l'une des revendications 1 à 3, dans lequel la connexion par réseau ad-hoc (2) entre le client mobile (1) et le relais mobile (3) et la première connexion entre le client mobile (1) et le réseau cellulaire (4) sont établies en employant des technologies différentes.

5. Procédé selon la revendication 4, dans lequel la première connexion est établie en utilisant une technologie de radiocommunication mobile, notamment selon une norme GSM (Global System for Mobile communications - Système global de communication mobile) ou UMTS (Universal Mobile Telecommunications System - Système universel de télécommunication mobile).

6. Procédé selon la revendication 4 ou 5, dans lequel la connexion par réseau ad-hoc (2) est établie en utilisant une technologie de réseaux locaux sans fil, notamment selon une norme WLAN (Wireless Local Area Network - Réseau local sans fil) ou BlueTooth.

7. Procédé selon l'une des revendications 1 à 6, dans lequel
- au moins une partie des données d'utilisateur à durée critique qui sont transmises depuis le client mobile (1) et destinées au réseau cellulaire (4) est transmise directement par le biais de l'interface radioélectrique (8) du client mobile (1) vers le réseau cellulaire (4) et/ou
- au moins une partie des données d'utilisateur à durée critique qui sont transmises depuis le réseau cellulaire (4) et destinées au client mobile (1) est transmise directement par le biais de l'interface radioélectrique (8) du réseau cellulaire (4) au client mobile (1).

8. Procédé selon l'une des revendications 1 à 7, dans lequel
- au moins une partie des données d'utilisateur à commutation de paquets qui sont transmises depuis le client mobile (1) et qui sont destinées au réseau cellulaire (4) est transmise par le biais du réseau ad-hoc (2) et du relais mobile (3) vers le réseau cellulaire (4) et/ou
- au moins une partie des données d'utilisateur à commutation de paquets qui sont transmises depuis le réseau cellulaire (4) et qui sont destinées au client mobile (1) est transmise par le biais du relais mobile (3) et du réseau ad-hoc (2) vers le client mobile (1).

9. Client mobile (1) comprenant une interface radioélectrique (8) pour connecter directement le client mobile (1) à un réseau cellulaire (4) pour échanger des données de signalisation à travers une première connexion et comprenant une interface de réseau ad-hoc pour connecter le client mobile (1) à un réseau ad-hoc (2) en vue de la transmission de données à travers une deuxième connexion, **caractérisé en ce que**
- l'interface radioélectrique (8) est conçue pour échanger directement les données de signalisation à travers un canal de commande de la première connexion à la fois pendant l'établissement de la deuxième connexion et pendant le maintien de la deuxième connexion ;
- l'interface de réseau ad-hoc est conçue pour établir une connexion entre le client mobile (1) et un relais mobile (3) connecté au réseau ad-hoc (2) et au réseau cellulaire (4), la connexion faisant partie de la deuxième connexion ; et
- l'interface de réseau ad-hoc est conçue pour transmettre au moins une partie des données d'utilisateur à transmettre entre le client mobile (1) et le réseau cellulaire (4) à travers la deuxième connexion.

10. Client mobile (1) selon la revendication 10, dans lequel l'interface radioélectrique (8) et l'interface de réseau ad-hoc sont des interfaces séparées.

11. Client mobile (1) selon la revendication 11, dans lequel l'interface radioélectrique (8) et l'interface de réseau ad-hoc sont des interfaces technologiquement différentes.

12. Client mobile (1) selon les revendications 10 à 12, dans lequel l'interface radioélectrique (8) est une interface de radiocommunication mobile destinée à la transmission de données, notamment selon une norme GSM (Global System for Mobile communications - Système global de communication mobile) ou UMTS (Universal Mobile Telecommunications System - Système universel de télécommunication mobile).

13. Client mobile (1) selon les revendications 10 à 13, dans lequel l'interface de réseau ad-hoc est une interface de réseau local sans fil destinée à la transmission de données, notamment selon une norme WLAN (Wireless Local Area Network - Réseau local sans fil) ou BlueTooth.

14. Système de télécommunication comprenant :
- un réseau cellulaire (4) ;
- un réseau ad-hoc (2) ;
- un client mobile (1) raccordé au réseau cellulaire (4) et au réseau ad-hoc (2) ;
- un relais mobile (3) connecté au réseau cellulaire (4) et au réseau ad-hoc (2) ;
- une première connexion établie entre le client mobile (1) et le réseau cellulaire (4) par le biais d'une interface radioélectrique (8) pour échanger des données de signalisation entre le client mobile (1) et le réseau cellulaire (4) ;
- une deuxième connexion établie entre le client mobile (1) et le réseau cellulaire (4) à travers le réseau ad-hoc (2) et le relais mobile (3) pour la transmission de données d'utilisateur entre le client mobile (1) et le réseau cellulaire (4) ; **caractérisé en ce que**
- l'interface radioélectrique (8) est conçue pour échanger directement les données de signalisation à travers un canal de commande de la première connexion à la fois pendant l'établissement de la deuxième connexion et pendant le maintien de la deuxième connexion ;
- le client mobile (1) comprend une interface de réseau ad-hoc conçue pour établir une connexion entre le client mobile (1) et le relais mobile (3), la connexion faisant partie de la deuxième connexion ; et
- l'interface de réseau ad-hoc est conçue pour transmettre au moins une partie des données d'utilisateur à transmettre entre le client mobile (1) et le réseau cellulaire (4) à travers la deuxième connexion.

15. Système de télécommunication selon la revendication 15, dans lequel le système de télécommunication comprend des moyens pour mettre en oeuvre un procédé selon l'une des revendications 1 à 9.

16. Programme informatique conçu pour être exécuté sur une unité de traitement de données, notamment sur un client mobile (1) et/ou un relais mobile (3), **caractérisé en ce que** le programme informatique est programmé pour mette en oeuvre un procédé selon l'une des revendications 1 à 9 si le programme informatique est exécuté sur une unité de traitement de données.

17. Programme informatique selon la revendication 17, **caractérisé en ce que** le programme informatique est stocké sur un dispositif de stockage, notamment une mémoire vive (RAM), une mémoire morte (ROM) ou une mémoire flash.

18. Programme informatique selon l'une des revendications 17 ou 18, **caractérisé en ce que** le programme informatique est stocké sur un compact disc (CD), un disque numérique universel (DVD) ou un disque dur.
